# EUROPEAN PATENT SPECIFICATION

(11) **EP 3 661 995 B1**
(45) Date of publication and mention of the grant of the patent: **28.04.2021**
(21) Application number: 18742884.2
(22) Date of filing: 27.06.2018
(51) Int. Cl.: C08G 69/04, C08G 69/36

(54) **A PROCESS FOR POLYMERIZING CYCLIC OLIGOMERS OF POLYAMIDES**
VERFAHREN ZUR POLYMERISATION VON CYCLISCHEN OLIGOMEREN VON POLYAMIDEN
PROCÉDÉ DE POLYMÉRISATION D'OLIGOMÈRES CYCLIQUES DE POLYAMIDES

(30) Priority: 01.08.2017 US 201762539735 P
(43) Date of publication of application: 10.06.2020
(73) Proprietor: AdvanSix Resins & Chemicals LLC, Parsippany, New Jersey 07054 (US)
(72) Inventor: KHARE, Neeraj, Parsippany, NJ 07054 (US); GERMAIN, Dana, A., Parsippany, NJ 07054 (US); NELLIAPPAN, Veera, Parsippany, NJ 07054 (US)
(74) Representative: Crooks, Elizabeth Caroline
(86) International application number: PCT/US2018/039653
(87) International publication number: WO 2019/027593

(56) References cited:
- EP-A1- 0 048 340
- EP-A1- 0 771 834
- US-A- 5 886 096
- US-A1- 2007 161 774
- US-A1- 2008 033 143
- US-B1- 6 548 626

## Description

### FIELD

The present disclosure relates to the production of polyamide copolymers and, in particular, relates to a process for the production of polyamide copolymers in which cyclic oligomers of the type typically formed as undesirable by-products in the production of polyamide polymers are used as a reactant feedstock in the process to make high molecular weight polymers.

### BACKGROUND

Polyamides (PA) are commercially important polymers due to their outstanding physical characteristics, and are used in applications such as packaging films, textile fibers and molded products. Two main polyamide homopolymers, namely, polyamide 6 (PA 6) and polyamide 66 (PA 66), are produced by hydrolytic ring-opening polymerization of caprolactam and by condensation polymerization of hexamethylene diamine and adipic acid, respectively.

Also, polyamide 6/66 (PA 6/66) copolymers have been more recently commercialized and, advantageously, have lower crystallinity and improved film clarity as compared to PA 6 and PA 66 homopolymers.

Cyclic oligomer analogs of caprolactam, such as cyclic dimers and higher analogs (C3-C9), for example, are unwanted by-products that are formed during the production of PA 6 and PA 6/66 copolymers. After polymerization of the monomers, the cyclic oligomers are removed by a leaching process, typically using hot water, for example, as the cyclic oligomers are typically detrimental to the end-use properties of the polymer. The cyclic oligomers that are extracted and concentrated from the leaching process have few desirable uses, and are typically discarded as waste materials. The hydrolytic polymerization route used in production of polyamide 6 polymer from pure caprolactam is typically inefficient in converting a predominant portion of the caprolactam into a high molecular weight polymer.

EP0771834 A1 discloses a process for producing a polyamide, where the process reduces the amount of cyclic dimer in the product by subjecting the cyclic dimer to a ring opening reaction, prior to its supply to the disclosed polymerisation reaction.

US6548626 B1 relates to a process for producing polyamides in the presence of metal oxides, beta-zeolites, sheet-silicates or silica gels which may be doped, as heterogeneous catalysts.

US2007161774 A1 relates to a continuous process for producing polyamides, comprising reaction of a water extract of caprolactam and oligomers thereof with aminonitriles or dinitriles and diamines or mixtures thereof.

US2008033143 A1 relates a method for producing a polyamide prepolymer including heating an aqueous solution of caprolactam under pressure at a temperature of from 200 to 330° C, to produce polyamide prepolymer having an amino end group content of at least 0.1 mmol/g and a cyclic oligomer content of at most 0.6% by weight.

What is needed is a process for the production of polyamides and, in particular, PA 6 copolymers, from cyclic oligomer residues, which is an improvement over the existing process.

### SUMMARY

The present disclosure provides a process for production of high molecular weight polyamide polymers, such as 6/66 copolymers, using a reactant stream that includes at least one lactam and cyclic oligomers. The stream is reacted with at least one diamine at an elevated temperature to ring-open the cyclic oligomers to produce amide pre-polymers that are end-capped with amine groups. The pre-polymers are then reacted with at least one diacid at an elevated temperature to form polyamide 6/66 copolymers. The cyclic oligomers may be formed as by-products during standard polymerization of polyamide polymers from monomers such as caprolactam, hexamethylene diamine and adipic acid.

In one form thereof, the present disclsoure provides a process for production of polyamide 6/66 copolymer, including the steps of: providing a reactant stream comprising at least one lactam and cyclic oligomers; reacting the reactant stream with at least one diamine to ring-open the at least one lactam and the cyclic oligomers to produce amide pre-polymers, the amide pre-polymers including amine end groups; and subsequently reacting the amide pre-polymers with at least one diacid to form polyamide 6/66 copolymer.

In the providing step, the reactant stream may include at least 10 wt.% cyclic oligomers, based on the total weight of the reactant stream.

In the first reacting step, between 0.5 and 20 wt.% of the at least one diamine may be used, based on the total weight of the reactant stream. In the second reacting step, a stoichiometric amount in the form of a 1:1 molar ratio of the at least one diacid may be used relative to the amount of diamine used in the first reacting step. In the second reacting step, a ratio of diacid to diamine used in the first reacting step may be from 0.8:1 to 1.2:1.

The cyclic oligomers may include caprolactam dimers and C3-C9 analogs. The at least one lactam may comprise caprolactam. The at least one diamine may comprise hexamethylene diamine. The at least one diacid may comprise adipic acid.

The first reacting step may be conducted at an elevated temperature of between 220°C and 280°C. The second reacting step may be conducted at an elevated temperature of between 220°C and 280°C.

The polyamide 6/66 copolymer may have a relative viscosity (RV) between 2.0 and 4.5 as determined by ISO 307:2007. The polyamide 6/66 copolymer may have a formic acid viscosity (FAV) between 30 and 150 as determined by ASTM D-789-07.

In another form thereof, the present disclosure provides a process for production of polyamide 6/66 copolymer, including the steps of: producing a primary polyamide polymer including a by-product composition including at least one lactam and cyclic oligomers; separating the by-product composition from the primary polyamide polymer; reacting the by-product composition with at least one diamine to ring-open the at least one lactam and the cyclic oligomers to produce amide pre-polymers, the amide pre-polymers including amine end groups; and reacting the amide pre-polymers with at least one diacid to form a polyamide 6/66 copolymer.

In the first reacting step, the by-product composition may include at least 15 wt.% cyclic oligomers. In the first reacting step, between 0.5 and 20 wt.% of the at least one diamine may be used. In the second reacting step, a stoichiometric amount in the form of a 1:1 molar ratio of the at least one diacid may be used relative to the amount of diamine used in the first reacting step. In the second reacting step, a ratio of diacid to diamine used in the first reacting step is from 0.8:1 to 1.2:1.

The secondary polyamide 6/66 copolymer may have a relative viscosity (RV) between 2.0 and 4.5 as determined by ISO 307:2007 and a formic acid viscosity (FAV) between 30 and 150 as determined by ASTM D-789-07. The first reacting step may be conducted at an elevated temperature of between 230°C and 280°C, and the second reacting step may be conducted at an elevated temperature of between 230°C and 280°C.

### DETAILED DESCRIPTION

Polyamide 6 (PA 6) and polyamide 66 (PA 66) are produced by hydrolytic ring-opening polymerization of caprolactam and by condensation polymerization of hexamethylene diamine and adipic acid, respectively.

Polyamide 6/66 copolymers are typically formed by reacting monomers of caprolactam, adipic acid and hexamethylene diamine. Adipic acid and hexamethylene diamine are typically commercially available together in a 1:1 molar proportion, referred to as "AH salt", either in solid form or in the form of an aqueous solution. Commercially available AH salt aqueous solutions range in concentration from 50% to 65% and are stored at temperatures between 70° to 100°C to prevent precipitation of salt crystals from the concentrated solution.

Traditional, hydrolytic polymerization of caprolactam involves three general chemistry steps: hydrolysis, polyaddition, and polycondensation. During hydrolysis, water reacts with caprolactam to initiate the formation of polymer chains. In polyaddition, caprolactam adds to the growing polymer chains. In the polycondensation step, the growing chains link with each other, resulting in significant molecular weight build and correspondingly high product viscosity. The polymerization may be carried out in a series of reaction vessels, the first of which is typically a hydrolyzer, followed by one or more reaction kettles where the polycondensation occurs.

In currently practiced commercial operations for the manufacture of polyamide 6/66 copolymers, an aqueous AH salt solution is blended with molten caprolactam, or an aqueous caprolactam solution, and the combined mixture is heated to remove water and to initiate and propagate polymerization.

To form polyamide 6/66 copolymers, caprolactam and AH salt are blended together at elevated temperatures, for example as low as about 145°C, 150°C, or 155°C, or as great as 160°C, 165°C, or 170°C, or within any range defined between any two of the foregoing values, such 140°C to 170°C, or 150°C to 165°C, or 155°C to 160°C, for example. The caprolactam and AH salt may be mildly agitated during heating to provide more uniform heat transfer and mixing. The AH salt may also be combined with the caprolactam as a dry powder, or may be combined with the caprolactam as an aqueous solution, such as an aqueous solution containing as little as about 50 wt.%, 52 wt.%, or 55 wt.%, or as great as 58 wt.%, 60 wt.%, or 65 wt.% solids, or within any range defined between any two of the foregoing values, such 50 wt.% to 60 wt.% or 55 wt.% to 60 wt.%, for example. Further, particularly when AH salt is used as a dry powder, the caprolactam and AH salt may optionally be blended in the presence of added water.

The mixture of caprolactam and AH salt, and optionally water, is polymerized to form the polyamide composition. The polymerization may be carried out using a batch reactor, a continuous-flow stirred tank reactor (CSTR), or a Vereinfacht Kontinuierliches (VK) tube, for example. During the reaction, water may be removed intermittently or continuously to drive the equilibrium of the reaction toward the polymerized products.

Although the yield and selectivity of the foregoing polymerization process for producing polyamide 6 and polyamide 66 homopolymers and polyamide 6/66 copolymers may be quite high, by-products are produced in addition to the desired polyamide products due to the equilibrium nature of the reaction. The by-products include unreacted monomers and cyclic oligomers. These by-products are often referred to as "extractables" and are separated from the polymer product chips, typically using a hot water wash. The separated extractables are then subjected to further processing to remove water and concentrate the extractables, which are then typically disposed of as waste.

According to the present process, extractable by-product compositions from polyamide polymerization processes are not discarded, but rather are used to form pre-polymers which may then be polymerized to form other desired polyamide end products, such as high molecular weight polyamide 6/66 copolymers.

The extractable by-product composition may include at least one lactam, such as caprolactam, and cyclic oligomers. The composition may contain up to 90 wt.% of the cyclic oligomers, for example, and in some embodiments, may contain 20-70 wt.% cyclic oligomers, based on the total weight of the composition.

Extractable by-product compositions may be separated from the primary polyamide polymer product stream by a suitable technique, and then processed via the further reaction steps described below to yield a secondary, or additional, polyamide polymer, such as polyamide 6/66 copolymer. In a first step, a by-product composition, including a mixture of at least one lactam and cyclic oligomers, is reacted with an amount of a diamine, such as hexamethylene diamine.

Other diamines may include tetramethylene diamine, pentamethylene diamine, o-phenylenediamine (OPD), *m*-phenylenediamine (MPD), *p*-phenylenediamine (PPD), 2,5-diaminotoluene, dimethyl-4-phenylenediamine, N,N'-di-2-butyl-1,4-phenylenediamine, 4,4'-diaminobiphenyl, and other suitable diamines according to the number of carbons include the following:
2 carbons: ethylenediamine (1,2-diaminoethane) and related derivatives such as 1,1-dimethylethylenediamine, 1,1-dimethylethylenediamine, ethambutol.
3 carbons: 1,3-diaminopropane (propane-1,3-diamine)
4 carbons: putrescine (butane-1,4-diamine)
5 carbons: cadaverine (pentane-1,5-diamine)

The amount of diamine used may be as little as 0.5 wt.%, 1 wt.%, or 2 wt.%, or as great as 5 wt.% , 10 wt.%, 15 wt.%, or 20 wt.%, or within any range defined between any pair of the foregoing values, based on the total weight of the reactant stream, which is the combined weight of the mixture and the diamine.

The reaction is carried out at an elevated temperature which may be as low as 200°C, 230°C, or 260°C or as high as 265°C, 275°C, or 285°C or within any range defined between any pair of the foregoing values, for a suitable time ranging from about 1-5 hours, such as nominally about 2 hours.

In the foregoing reaction, the amine ring-opens the cyclic amine oligomer according to Equation 1 below:

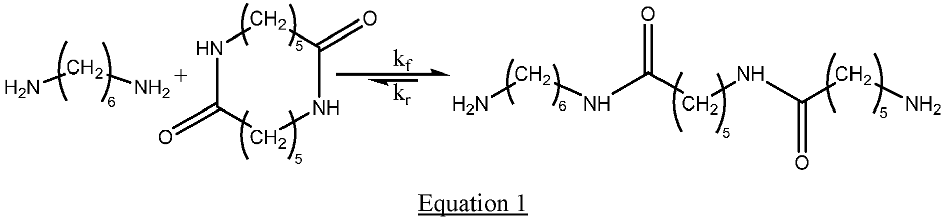

The product of Equation 1 above is a pre-polymer which is substantially terminated on both of its ends with amine groups, and the overall composition at this stage will include excess amine or, stated differently, an amine end group imbalance. The amine end groups of the pre-polymer remain substantially unreacted, and the reaction of Equation 1 is substantially facile, meaning that the diamine consumes substantially all of the cyclic oligomers, i.e., in Equation 1 above, the forward equilibrium constant k_{f} is substantially greater than the reverse equilibrium constant kᵣ.

In a subsequent step, a diacid, such as adipic acid, is reacted with the pre-polymer. Other diacids may include analogs up to azelaic acid C9. Typically, a stoichiometric equivalent amount, in the form of an approximate 1:1 molar ratio, of diacid will be added relative to the amount of diamine used during the first stage reaction above. In some embodiments, the amount of diacid that may be added, relative to one molar equivalent of diamine, may be as little as 0.8 or 0.9, or as great as 1.1 or 1.2, or within any range defined between any two of the foregoing values, such as ratios of diacid to diamine of 0.8:1 to 1.2:1, 0.9:1 to 1.2:1, 0.8:1 to 1.1:1, or 0.9:1 to 1.1:1, for example.

The diacids react with the amine ends of the pre-polymers to build higher molecular weight polymers, specifically, higher molecular weight polyamide 6/66 copolymers. The amount of diacid used may be as little as 1 wt.%, 2 wt.%, or 3 wt.%, or as great as 10 wt.% , 15 wt.% ,or 20 wt.%, or within any range defined between any pair of the foregoing values, based on the total weight of the reactant stream, which is the combined weight of the mixture and the diamine.

The reaction of diacids with amine terminated pre-polymers is carried out at an elevated temperature which may be as low as 220°C, 240°C, or 260°C or as high as 270°C, 280°C, or 285°C or within any range defined between any pair of the foregoing values, for a suitable time ranging from about 1-5 hours, such as nominally about 2 hours.

The polyamide 6/66 copolymers produced may have a relative viscosity (RV) as little as 2.0, 2.5, or 3.0, or as great as 3.1, 4.0, or 4.5, or within any range defined between any two of the foregoing values, such as 2.0 to 4.5, 2.5 to 4.0, or 3.0 to 3.1, for example, as determined according to GB/T 12006-1/ISO 307:2007 and/or a formic acid viscosity (FAV) as little as 30, 45, or 60, or as great as 70, 150, 300, or 500, or within any range defined between any two of the foregoing values, such as 30 to 500, 45 to 300, or 60 to 150, for example, as determined according to ASTM D-789-07.

As used herein, the phrase "within any range defined between any two of the foregoing values" literally means that any range may be selected from any two of the values listed prior to such phrase regardless of whether the values are in the lower part of the listing or in the higher part of the listing. For example, a pair of values may be selected from two lower values, two higher values, or a lower value and a higher value.

### EXAMPLES

### Example 1

### Production of polyamide 6/66 copolymer from caprolactam and cyclic oligomers

1500 grams of a mixture containing 80 wt.% caprolactam and 20 wt.% cyclic oligomers (derived from cyclization of caprolactam) was charged into a 2L Parr reaction vessel fitted with an anchor type agitator. 15 grams of hexamethylene diamine (Sigma Aldrich) was added following the addition of the former mixture to the reaction vessel. After pressure testing the reactor with nitrogen, the contents of the reactor were repressurized with nitrogen, then heated to 170°C over a 30 minute period and, upon reaching that temperature, the agitator was turned on and set at 80 rpm. The reactor was then heated from 170°C to a temperature of 260°C over a 20 minute time period and the reaction was allowed to proceed for an hour at this temperature, during which no significant pressure rise was noted. The reaction mixture was allowed to cool to room temperature. Agitation was stopped at 200°C.

Then, a stoichiometric amount (18.9 grams) of adipic acid (relative to hexamethylene diamine) was added through the addition port and the reactor was sealed after pressurizing with N₂ to 345 KPa (50 psi). The contents of the reactor were then heated to 260°C over a period of 40 minutes with the agitation turned on at 200°C. The reaction mixture was allowed to react at 260°C for 30 minutes, and the pressure was noted to be 138 KPa (20 psi). Subsequently, the reactor was vented and a vacuum of -27" to -28" mercury was applied to the contents of the reactor over the next 10 minutes. Then, it was noted that the torque was reaching the maximum value that could be supported by the motor and the reaction was stopped by breaking the vacuum and sweeping with nitrogen (0.8L/min).

Immediately afterwards, the reactor was opened by removing the bottom plug, and polymer was allowed to extrude into an ice bath. The collected polymer was saved for analysis of solution viscosity, residual caprolactam and cyclic oligomers, and melting point.

50 grams of the polymer strand was pelletized using a Thomas-Wiley Model 4 (Arthur H. Thomas Company, Philadelphia, PA, USA) grinder. Subsequently, the polymer was leached at 130°C in a pressure cooker with deionized water. The relative viscosity of the resulting polymer was measured to be 2.3 (GB/T 12006-1/ISO 307:2007) and a formic acid viscosity of 37 according to ASTM D-789-07. The residual caprolactam was measured using HPLC (Waters 2487 detector). The concentration of caprolactam and cyclic oligomers were measured to be as follows: C₁: 30,225 ppm, C₂: 22,000 ppm; C₃: 13,675 ppm; C₄: 8,275 ppm; C₅:4,000 ppm, C₆:1,075 ppm, C₇:250 ppm.

## Claims

1. A process for production of polyamide 6/66 copolymer, comprising the steps of:
providing a reactant stream comprising at least one lactam and cyclic oligomers;
reacting the reactant stream with at least one diamine to ring-open the at least one lactam and the cyclic oligomers to produce amide pre-polymers, the amide pre-polymers including amine end groups; and
subsequently reacting the amide pre-polymers with at least one diacid to form polyamide 6/66 copolymer.

2. The process of claim 1, wherein in the providing step, the reactant stream includes at least 10 wt.% cyclic oligomers, based on the total weight of the reactant stream.

3. The process of claim 1, wherein in the first reacting step, between 0.5 and 20 wt.% of the at least one diamine is used, based on the total weight of the reactant stream.

4. The process of claim 1, wherein in the second reacting step,
a) a stoichiometric amount in the form of a 1:1 molar ratio of the at least one diacid is used relative to the amount of diamine used in the first reacting step; or
b) a ratio of diacid to diamine used in the first reacting step is from 0.8:1 to 1.2:1.

5. The process of claim 1, wherein the cyclic oligomers include caprolactam dimers and C3-C9 analogs.

6. The process of claim 1, wherein the at least one lactam comprises caprolactam.

7. The process of claim 1, wherein
a) the at least one diamine comprises hexamethylene diamine; or
b) the at least one diacid comprises adipic acid.

8. The process of claim 1, wherein
a) the first reacting step is conducted at an elevated temperature of between 220°C and 280°C; or
b) the second reacting step is conducted at an elevated temperature of between 220°C and 280°C.

9. The process of claim 1, wherein the polyamide 6/66 copolymer
a) has a relative viscosity (RV) between 2.0 and 4.5 as determined by ISO 307:2007; or
b) has a formic acid viscosity (FAV) between 30 and 150 as determined by ASTM D-789-07.

10. A process for production of polyamide 6/66 copolymer, comprising the steps of:
producing a primary polyamide polymer including a by-product composition including at least one lactam and cyclic oligomers;
separating the by-product composition from the primary polyamide polymer;
reacting the by-product composition with at least one diamine to ring-open the at least one lactam and the cyclic oligomers to produce amide pre-polymers, the amide pre-polymers including amine end groups; and
reacting the amide pre-polymers with at least one diacid to form a polyamide 6/66 copolymer.

11. The process of claim 10, wherein in the first reacting step, the by-product composition includes at least 15 wt.% cyclic oligomers.

12. The process of claim 10, wherein in the first reacting step, between 0.5 and 20 wt.% of the at least one diamine is used.

13. The process of claim 10, wherein in the second reacting step,
a) a stoichiometric amount in the form of a 1:1 molar ratio of the at least one diacid is used relative to the amount of diamine used in the first reacting step; or
b) a ratio of diacid to diamine used in the first reacting step is from 0.8:1 to 1.2:1.

14. The process of claim 10, wherein the secondary polyamide 6/66 copolymer has a relative viscosity (RV) between 2.0 and 4.5 as determined by ISO 307:2007 and a formic acid viscosity (FAV) between 30 and 150 as determined by ASTM D-789-07.

15. The process of claim 10, wherein the first reacting step is conducted at an elevated temperature of between 230°C and 280°C, and the second reacting step is conducted at an elevated temperature of between 230°C and 280°C.

## Patentansprüche

1. Verfahren zur Herstellung von Polyamid-6/66-Copolymer als Produkt, bei dem man:
einen Eduktstrom bereitstellt, der mindestens ein Lactam und cyclische Oligomere umfasst;
den Eduktstrom mit mindestens einem Diamin zur Ringöffnung von dem mindestens einem Lactam und den cylischen Oligomeren unter Herstellung von Amidpräpolymeren umsetzt, wobei die Amidpräpolymere Aminendgruppen enthalten; und
anschließend die Amidpräpolymere mit mindestens einer Disäure zur Bildung von Polyamid-6/66-Copolymer umsetzt.

2. Verfahren nach Anspruch 1, wobei der Eduktstrom beim Bereitstellungsschritt mindestens 10 Gew.-% cyclische Oligomere, bezogen auf das Gesamtgewicht des Eduktstroms, enthält.

3. Verfahren nach Anspruch 1, wobei beim ersten Umsetzungsschritt zwischen 0,5 und 20 Gew.-% des mindestens einen Diamins, bezogen auf das Gesamtgewicht des Eduktstroms, eingesetzt werden.

4. Verfahren nach Anspruch 1, wobei beim zweiten Umsetzungsschritt
a) eine stöchimetrische Menge der mindestens einen Disäure in Form eines Molverhältnisses von 1:1, relativ zur Menge an im ersten Umsetzungsschritt eingesetzten Diamin, eingesetzt wird; oder
b) ein Verhältnis von Disäure zu im ersten Umsetzungsschritt eingesetzten Diamin 0,8:1 bis 1,2:1 beträgt.

5. Verfahren nach Anspruch 1, wobei die cyclischen Oligomere Caprolactamdimere und C3-C9-Analoga enthalten.

6. Verfahren nach Anspruch 1, wobei das mindestens eine Lactam Caprolactam umfasst.

7. Verfahren nach Anspruch 1, wobei
a) das mindestens eine Diamin Hexamethylendiamin umfasst; oder
b) die mindestens eine Disäure Adipinsäure umfasst.

8. Verfahren nach Anspruch 1, wobei
a) der erste Umsetzungsschritt bei einer erhöhten Temperatur zwischen 220 °C und 280 °C durchgeführt wird; oder
a) der zweite Umsetzungsschritt bei einer erhöhten Temperatur zwischen 220 °C und 280 °C durchgeführt wird.

9. Verfahren nach Anspruch 1, wobei das Polyamid-6/66-Copolymer
a) eine gemäß ISO 307:2007 bestimmte relative Viskosität (RV) zwischen 2,0 und 4,5 aufweist; oder
a) eine gemäß ASTM D-789-07 bestimmte Ameisensäure-Viskosität (Formic Acid Viscosity, FAV) zwischen 30 und 150 aufweist.

10. Verfahren zur Herstellung von Polyamid-6/66-Copolymer, bei dem man:
ein primäres Polyamidpolymer, einschließlich einer Nebenprodukt-Zusammensetzung, die mindestens ein Lactam und cyclische Oligomere enthält, herstellt;
die Nebenprodukt-Zusammensetzung von dem primären Polyamidpolymer trennt;
die Nebenprodukt-Zusammensetzung mit mindestens einem Diamin zur Ringöffnung bei dem mindestens einen Lactam und den cylischen Oligomeren unter Herstellung von Amidpräpolymeren umsetzt, wobei die Amidpräpolymere Aminendgruppen enthalten; und
die Amidpräpolymere mit mindestens einer Disäure zur Bildung eines Polyamid-6/66-Copolymers umsetzt.

11. Verfahren nach Anspruch 10, wobei die Nebenprodukt-Zusammensetzung beim ersten Umsetzungsschritt mindestens 15 Gew.-% cyclische Oligomere enthält.

12. Verfahren nach Anspruch 10, wobei beim ersten Umsetzungsschritt zwischen 0,5 und 20 Gew.-% des mindestens einen Diamins eingesetzt werden.

13. Verfahren nach Anspruch 10, wobei beim zweiten Umsetzungsschritt
a) eine stöchiometrische Menge der mindestens einen Disäure in Form eines Molverhältnisses von 1:1, relativ zur Menge an im ersten Umsetzungsschritt eingesetzten Diamin, eingesetzt wird; oder
b) ein Verhältnis von Disäure zu im ersten Umsetzungsschritt eingesetzten Diamin 0,8:1 bis 1,2:1 beträgt.

14. Verfahren nach Anspruch 10, wobei das sekundäre Polyamid-6/66-Copolymer eine gemäß ISO 307:2007 bestimmte relative Viskosität (RV) zwischen 2,0 und 4,5 aufweist und eine gemäß ASTM D-789-07 bestimmte Ameisensäure-Viskosität (Formic Acid Viscosity, FAV) zwischen 30 und 150 aufweist.

15. Verfahren nach Anspruch 10, wobei der erste Umsetzungsschritt bei einer erhöhten Temperatur zwischen 230 °C und 280 °C durchgeführt wird und der zweite Umsetzungsschritt bei einer erhöhten Temperatur zwischen 230 °C und 280 °C durchgeführt wird.

## Revendications

1. Procédé pour la production d'un copolymère de polyamide 6/66, comprenant les étapes de :
mise à disposition d'un flux de réactant comprenant au moins un lactame et des oligomères cycliques ;
mise en réaction du flux de réactant avec au moins une diamine pour ouvrir le cycle de l'au moins un lactame et des oligomères cycliques pour produire des prépolymères de type amide, les prépolymères de type amide comportant des groupes terminaux de type amine ;
et
subséquemment, mise en réaction des prépolymères de type amide avec au moins un diacide pour former un copolymère de polyamide 6/66.

2. Procédé selon la revendication 1, dans lequel dans l'étape de mise à disposition, le flux de réactant comporte au moins 10 % en poids d'oligomères cycliques, sur la base du poids total du flux de réactant.

3. Procédé selon la revendication 1, dans lequel dans la première étape de mise en réaction, entre 0,5 et 20 % en poids de l'au moins une diamine sont utilisés, sur la base du poids total du flux de réactant.

4. Procédé selon la revendication 1, dans lequel dans la deuxième étape de mise en réaction,
a) une quantité stoechiométrique sous la forme d'un rapport molaire 1 : 1 de l'au moins un diacide est utilisée par rapport à la quantité de diamine utilisée dans la première étape de mise en réaction ; ou
b) un rapport de diacide sur diamine utilisés dans la première étape de mise en réaction étant de 0,8 : 1 à 1,2 : 1.

5. Procédé selon la revendication 1, les oligomères cycliques comportant des dimères de caprolactame et des analogues en C3-C9.

6. Procédé selon la revendication 1, l'au moins un lactame comprenant le caprolactame.

7. Procédé selon la revendication 1,
a) l'au moins une diamine comprenant l'hexaméthylènediamine ; ou
b) l'au moins un diacide comprenant l'acide adipique.

8. Procédé selon la revendication 1,
a) la première étape de mise en réaction étant conduite à une température élevée comprise entre 220 °C et 280 °C ; ou
b) la deuxième étape de mise en réaction étant conduite à une température élevée comprise entre 220 °C et 280 °C.

9. Procédé selon la revendication 1, le copolymère de polyamide 6/66
a) possédant une viscosité relative (VR) comprise entre 2,0 et 4,5 telle que déterminée par la norme ISO 307:2007 ; ou
b) possédant une viscosité dans l'acide formique (VAF) comprise entre 30 et 150 telle que déterminée par la norme ASTM D-789-07.

10. Procédé pour la production d'un copolymère de polyamide 6/66, comprenant les étapes de :
production d'un polymère de type polyamide primaire comportant une composition de sous-produit comportant au moins un lactame et des oligomères cycliques ;
séparation de la composition de sous-produit du polymère de type polyamide primaire ;
mise en réaction de la composition de sous-produit avec au moins une diamine pour ouvrir le cycle de l'au moins un lactame et des oligomères cycliques pour produire des prépolymères de type amide, les prépolymères de type amide comportant des groupes terminaux de type amine ; et
mise en réaction des prépolymères de type amide avec au moins un diacide pour former un copolymère de polyamide 6/66.

11. Procédé selon la revendication 10, dans lequel dans la première étape de mise en réaction, la composition de sous-produit comporte au moins 15 % en poids d'oligomères cycliques.

12. Procédé selon la revendication 10, dans lequel dans la première étape de mise en réaction, entre 0,5 et 20 % en poids de l'au moins une diamine sont utilisés.

13. Procédé selon la revendication 10, dans lequel dans la deuxième étape de mise en réaction,
a) une quantité stoechiométrique sous la forme d'un rapport molaire 1 : 1 de l'au moins un diacide est utilisée par rapport à la quantité de diamine utilisée dans la première étape de mise en réaction ; ou
b) un rapport de diacide sur diamine utilisés dans la première étape de mise en réaction étant de 0,8 : 1 à 1,2 : 1.

14. Procédé selon la revendication 10, le copolymère de polyamide 6/66 secondaire possédant une viscosité relative (VR) comprise entre 2,0 et 4,5 telle que déterminée par la norme ISO 307:2007 et une viscosité dans l'acide formique (VAF) comprise entre 30 et 150 telle que déterminée par la norme ASTM D-789-07.

15. Procédé selon la revendication 10, la première étape de mise en réaction étant conduite à une température élevée comprise entre 230 °C et 280 °C, et la deuxième étape de mise en réaction étant conduite à une température élevée comprise entre 230 °C et 280 °C.
